# EUROPÄISCHE PATENTSCHRIFT

(11) **EP 1 594 728 B1**
(45) Veröffentlichungstag und Bekanntmachung des Hinweises auf die Patenterteilung: **26.05.2010**
(21) Anmeldenummer: 03767470.2
(22) Anmeldetag: 10.12.2003
(51) Int. Cl.: B60S 1/38

(54) **WISCHVORRICHTUNG FÜR SCHEIBEN VON KRAFTFAHRZEUGEN UND VERFAHREN ZU DEREN HERSTELLUNG**
WINDOW WIPER FOR MOTOR VEHICLES AND METHOD FOR PRODUCING THE SAME
DISPOSITIF D'ESSUIE-GLACE DE VEHICULE ET PROCEDE DE FABRICATION ASSOCIE

(30) Priorität: 10.02.2003 DE 10305323
(43) Veröffentlichungstag der Anmeldung: 16.11.2005
(73) Patentinhaber: ROBERT BOSCH GMBH, 70442 Stuttgart (DE)
(72) Erfinder: SURKAMP, Gundolf, 76530 Baden-Baden (DE); CRIEL, Paul, B-3800 St. Truiden (BE); DE BLOCK, Peter, B-3545 Halen (BE); CRABBE, Rudi, B-3350 Linter (BE)
(86) Internationale Anmeldenummer: PCT/DE2003/004071
(87) Internationale Veröffentlichungsnummer: WO 2004/069617

(56) Entgegenhaltungen:
- DE-A- 10 007 808
- DE-A- 10 111 757
- DE-A- 19 522 273
- DE-A- 19 835 065
- US-A- 5 412 834

## Beschreibung

Die Erfindung betrifft ein Verfahren zur Herstellung einer Wischvorrichtung mit den im Oberbegriff des Patentanspruchs 1 genannten Merkmalen.

### Stand der Technik

Gelenkfreie Wischblätter für Scheiben von Kraftfahrzeugen sind bekannt. Ein solches Wischblatt besteht typischerweise aus einer Wischleiste, die mit einer, in einen seitlichen Hohlraum der Wischleiste eingeschobenen Federschiene versehen ist oder deren Wischleiste an einer Federschiene mittels Kleben befestigt ist, und die eine an der Scheibe anlegbare Wischlippe aufweist. Die Krümmung und die Federeigenschaften der die Wischleiste verstärkenden Federschiene bestimmt maßgeblich die Anlagefähigkeit der Wischlippe an die Krümmung der Windschutzscheibe und damit die Wischeigenschaften des Wischblattes. Weiterhin ist das Wischblatt ungefähr mittig mittels eines Adapters bzw. eines Kupplungsteils lösbar an einem schwenkbaren Wischerarm des Kraftfahrzeugs fixiert. Derartige einteilige Wischblätter sind beispielsweise in der WO 00/73113 A1 und aus der DE 101 11 757 A1 beschrieben.

Ein Adapter wird üblicherweise mittels fester Klemmung und entsprechend hoher Reibung auf dem Wischblatt montiert, wobei durch die relativ hohe Klemmkraft gleichzeitig die Federschiene in der Wischleiste gehalten ist. Auf diese Weise wird die Federleiste insbesondere in Längsrichtung gehalten und eine Relativbewegung zur Wischleiste verhindert. Die Federleiste kann gegebenenfalls zusätzlich durch eine Klebung im Hohlprofil der Wischleiste fixiert sein.

Um die Federschiene in der Wischleiste überhaupt montieren zu können, ist ein ausreichendes Spiel zwischen dem Hohlprofilquerschnitt und der Federschiene und ein nicht zu hoher Reibwert vonnöten. Beides kann jedoch beim Betrieb des Wischblatts dazu führten, dass sich die Federschiene in der Wischleiste drehen kann bzw. dass sich Abschnitte der Wischleiste um die Federschiene verdrehen können. Um dies weitest gehend zu verhindern und um eine möglichst gute Klemmung des Adapters auf der Wischleiste zu gewährleisten, ist eine hohe Klemmkraft notwendig. Diese kann allerdings dazu führen, dass die Wischleiste aus Gummi verquetscht und dass die Wischlippe verformt wird und nicht mehr optimal an der Scheibe anliegt.

DE-A-100 07808 offenbart den Oberbegriff des Anspruchs 1.

### Vorteile der Erfindung

Eine Wischvorrichtung für Scheiben von Kraftfahrzeugen gemäß der vorliegenden Erfindung besteht aus einem Wischblatt mit einer Wischleiste und einer Wischlippe sowie ggf. einem mit dem Wischblatt verbindbaren Kupplungsteil zur lösbaren Verbindung mit einem schwenkbaren Wischerarm des Fahrzeugs. Das Wischblatt kann insbesondere ein gelenkloses Wischblatt sein. Die Wischleiste weist ein Hohlprofil für eine einschiebbare und darin gehaltene Federschiene auf, die dem Wischblatt die für eine gute Anpassung an die variable Krümmung der Scheibe erforderliche Elastizität und Spannung verleiht. Erfindungsgemäß ist vorgesehen, dass ein Hohlkanal des Hohlprofils zumindest abschnittsweise einen Querschnitt aufweist, der einem Querschnitt der Federschiene entspricht oder geringfügig kleiner ist als dieser. Ggf. kann auch vorgesehen sein, dass der Hohlkanal zumindest abschnittsweise eine kleinere Breite und/oder kleinere Dicke aufweist als eine Breite bzw. Dicke der Federschiene.

Auf diese Weise wird die in den Hohlkanal eingeschobene Federschiene dort mit einem strammen Presssitz gehalten und kann weder in Längsrichtung aus der Wischleiste geschoben werden noch sich relativ zu dieser verdrehen. Insbesondere kann verhindert werden, dass sich die Enden der Wischleiste gegenüber der relativ torsionssteifen Federschiene verdrehen. Die Wischlippe würde hierbei von der Scheibe abheben, wodurch sich die Wischeigenschaften der Wischvorrichtung drastisch verschlechtern würden.

Die Federschiene kann einen konstanten Querschnitt über ihre gesamte Länge aufweisen. Alternativ hierzu kann sie auch einen variablen Querschnitt aufweisen. Insbesondere kann der Querschnitt in einem mittleren Bereich größer sein als an den Endabschnitten. Dies führt dazu, dass die Federschiene eine über ihre Länge variable Steifigkeit aufweist, was bei einer stark gekrümmten Scheibe und einem im entspannten Zustand entsprechend gekrümmten Wischblatt vorteilhaft sein kann, da sich die Enden des Wischblatts beim Überstreichen eines schwächer gekrümmten mittleren Bereichs der Scheibe leichter deren Kontur anpassen können. Der Querschnitt des Hohlkanals folgt vorzugsweise der Kontur der Federschiene weitest gehend, damit diese über ihre gesamte Länge stramm im Hohlprofil gehalten ist. Je nach Kontur der Scheibe kann die Krümmung der entspannten Federschiene konstant oder variabel sein.

Bei einem erfindungsgemäßen Verfahren zur Herstellung einer Wischvorrichtung für Scheiben von Kraftfahrzeugen, die aus einem Wischblatt mit einer Wischleiste und einer Wischlippe sowie ggf. einem mit dem Wischblatt verbindbaren Kupplungsteil zur lösbaren Verbindung mit einem schwenkbaren Wischerarm besteht, wird eine Federschiene in einen Hohlkanal eines Hohlprofils der Wischleiste eingeschoben. Der Hohlkanal weist im entspannten Zustand zumindest abschnittsweise einen Querschnitt bzw. eine Breite und/oder Dicke auf, der/die einem Querschnitt bzw. einer Breite und/oder Dicke der Federschiene entspricht oder geringfügig kleiner ist als dieser. Entsprechend der Erfindung ist vorgesehen, dass der Hohlkanal während des Einschiebens der Federschiene aufgeweitet wird. Auf diese Weise kann erreicht werden, dass die Federschiene während des Betriebs der Wischvorrichtung mit einem sehr strammen Sitz in der Wischleiste gehalten wird. Hierdurch werden weitest gehend alle Relativbewegungen in Längs- und/oder Umfangsrichtung zwischen Wischleiste und Federschiene vermieden.

Der Hohlkanal muss während des Einschiebens der Federschiene zumindest auf einen Querschnitt aufgeweitet werden, der gleich dem Querschnitt der Federschiene ist, damit diese mit vertretbarem Kraftaufwand in die Wischleiste eingeschoben werden kann. Zusätzliche Hilfsmittel wie Talkum oder Seifenlauge bergen das Risiko, dass Reste davon innerhalb des Hohlkanals verbleiben und den Haftreibwert zwischen Innenfläche des Hohlkanals und Federschiene herab setzen. Derartige Hilfsmittel sind jedoch beim erfindungsgemäßen Verfahren verzichtbar.

Der Hohlkanal ist gemäß der Erfindung mittels Überdruck, durch Einblasung von Pressluft aufgeweitet. Hierzu kann ein offenes Ende des Hohlkanals vorübergehend verschlossen werden, während das andere Ende unter Überdruck gesetzt und gleichzeitig die Federschiene eingeschoben wird. Nachdem diese eingeschoben ist, kann der Überdruck abgebaut werden, so dass das Wischblatt seine endgültige Gestalt erhält. Anschließend kann das Kupplungsteil angebracht werden, mittels dessen das Wischblatt mit dem schwenkbaren Wischerarm des Kraftfahrzeugs verbunden werden kann.

Zur Montage wird die Federschiene vorzugsweise an einer Seite um einige Millimeter in das Hohlprofil eingeschoben, wonach die Wischleiste in einem Bereich von ca. 5 mm durch Aufbringung einer Federkraft um die Federschiene abgedichtet, so dass möglichst wenig Pressluft entweichen kann. An der anderen Seite des Hohlprofils wird Pressluft eingeblasen und damit Überdruck aufgebracht. Damit wird die Wischleiste aufgeblasen und der Hohlkanal erweitert, wodurch die Federschiene leicht eingeschoben werden kann. Der Wischgummi bleibt so lange aufgeblasen, bis die Federschiene vollständig montiert ist. Danach wird die Pressluft abgelassen, so dass nach der Entspannung ein strammer Presssitz um die Federschiene entsteht. Um zu verhindern, dass die Wischleiste zu weit aufgeblasen wird, kann ggf. eine Umkapselung vorgesehen sein, welche die maximale Dehnung begrenzt.

Das erfindungsgemäße Verfahren eignet sich zur Herstellung von gelenklosen Wischblättern. Das an der Wischleiste vorgesehene Kupplungsteil kann ggf. entfallen, so dass alternativ auch an der Wischleiste selbst eine Vorrichtung zur lösbaren Verbindung mit einem Wischerarm vorgesehen sein kann.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigt:
- Figur 1: eine schematische Seitenansicht einer erfindungsgemäßen Wischvorrichtung,
- Figur 2: eine vergrößerte Darstellung der Wischvorrichtung gemäß Figur 1,

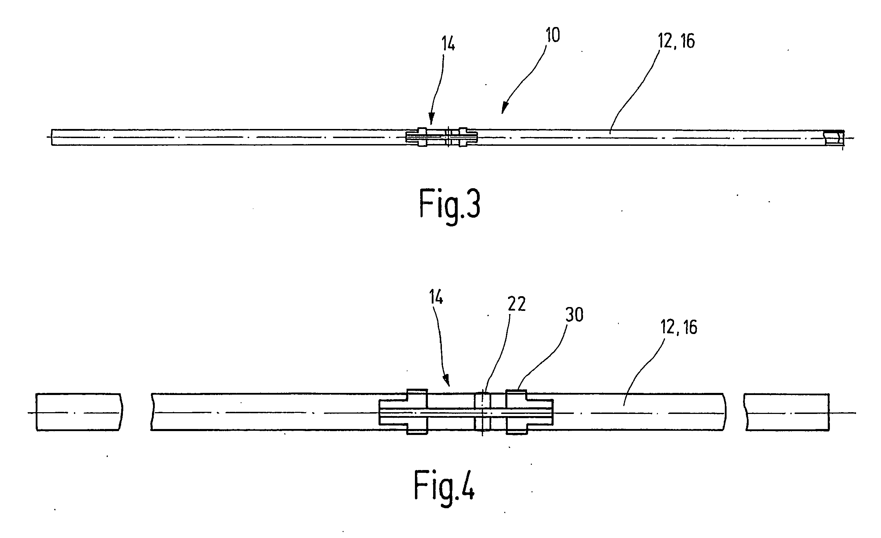

- Figur 3: eine schematische Draufsicht auf die Wischvorrichtung ge- mäß Figur 1,
- Figur 4: eine vergrößerte Darstellung der Wischvorrichtung gemäß Figur 3,
- Figur 5: eine schematische Schnittansicht entlang der Schnittlinie V- V der Figur 2 und
- Figur 6: eine schematische Schnittansicht entlang der Schnittlinie VI-VI der Figur 2.

### Beschreibung der Ausführungsbeispiele

Eine erfindungsgemäße Wischvorrichtung 10 umfasst ein Wischblatt 12, das aus einer Wischleiste 16 und einer einstückig mit dieser ausgebildeten Wischlippe 18 besteht. Die Wischlippe 18 dient zur Reinigung einer Scheibe eines Kraftfahrzeugs. Ein Kupplungsteil 14 ist ungefähr mittig am Wischblatt 12 angebracht und dient zur lösbaren Verbindung mit einem schwenkbaren Wischerarm (nicht dargestellt). Hierzu weist das Kupplungsteil 14 einen Gelenkbolzen 22 auf, dessen Längsachse senkrecht zur Längserstreckungsrichtung des Wischblatts 12 ausgerichtet ist.

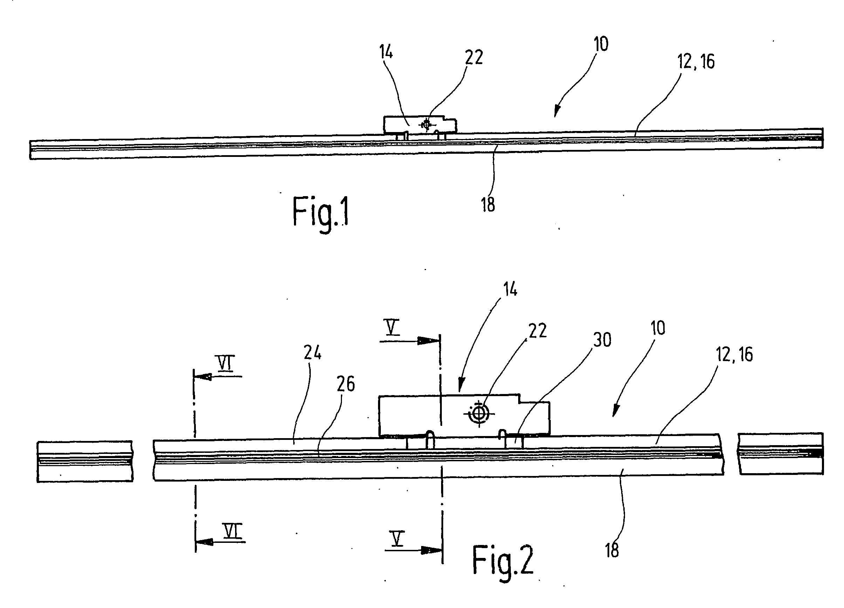

Die Wischleiste 16 weist über seine gesamte Länge ein Hohlprofil 24 und unterhalb davon im Querschnitt symmetrisch angeordnete Führungsnuten 26 auf. Darin können jeweils Klammern 30 des Kupplungsteils 14 eingreifen, so dass das Wischblatt fest mit dem Kupplungsteil 14 verbindbar ist. Das Kupplungsteil 14 umfasst typischerweise wenigstens zwei Paare von gegenüber liegend angeordneten Klammern 30, wie dies in den Figuren 1 und 2 verdeutlicht ist. Auf diese Weise wird ein Verdrehen des Wischblattes 12 gegen das Kupplungsteil 14 verhindert. Alternativ ist auch eine 3-Punkt-Befestigung möglich, bei der an einer Seite der Wischleiste zwei Klammer und an der gegenüber liegenden Seite lediglich eine Klammer vorgesehen ist. Die eine Klammer umgreift die Wischleiste vorzugsweise in einer Position, die ungefähr mittig zwischen den beiden gegenüber liegenden Klammern angeordnet ist.

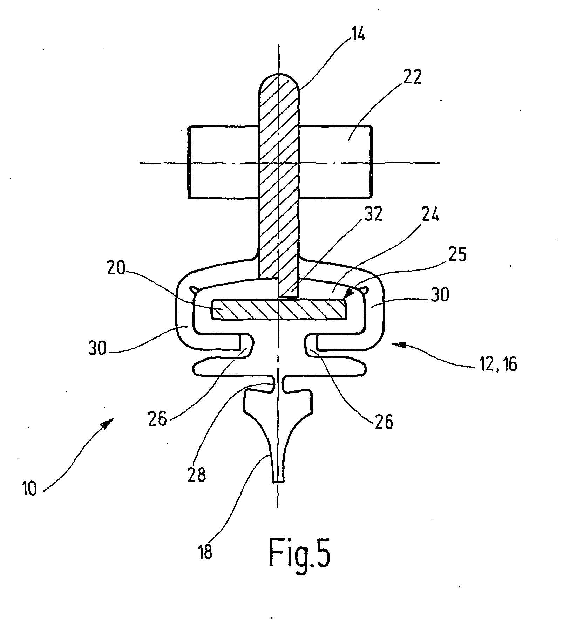

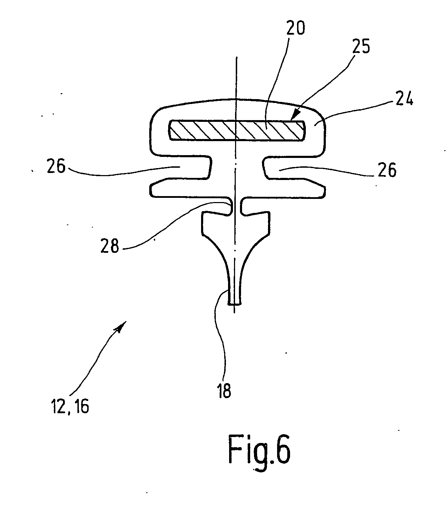

Unterhalb des Hohlprofils 24 und der Führungsnuten 26 ist ein relativ dünner Gelenkabschnitt 28 vorgesehen, über den die Wischlippe 18 flexibel mit der Wischleiste 16 verbunden ist (vgl. Figuren 5 und 6). Das aus Wischleiste 16 und Wischlippe 18 bestehende Wischblatt 12 besteht vorzugsweise aus Kautschuk oder einem anderen geeigneten elastischen Material. Das Kupplungsteil 14 kann insbesondere aus Metall oder Kunststoff bestehen.

Das Hohlprofil 24 weist einen durchgehenden Hohlkanal 25 auf, in den eine Federschiene 20 einschiebbar ist. Der Hohlkanal 25 und die entsprechend geformte Federschiene 20 weist einen annähernd rechteckigen Querschnitt mit Schmalseiten auf, die senkrecht zur Scheibenoberfläche stehen (vgl. Figuren 5 und 6). Die Grundseiten des rechteckigen Querschnitts sind dagegen relativ breit, so dass das Wischblatt 12 ausschließlich in senkrechter Richtung zur Scheibe des Fahrzeugs flexibel ist, nicht jedoch in paralleler Richtung hierzu. Die Federschiene 20 gibt dem Wischblatt 12 seine erforderliche Steifigkeit und Elastizität und sorgt für einen gleichmäßigen Anpressdruck der Wischlippe 18 auf der Scheibe.

Der Hohlkanal 25 weist gemäß der Erfindung einen Querschnitt auf, der maximal gleich dem Querschnitt der Federschiene 20, vorzugsweise jedoch etwas geringer ist. Hierdurch wird die Federschiene 20 fest im Hohlprofil gehalten, so dass Relativbewegungen in Längs- und/oder Umfangsrichtung zwischen Wischleiste 16 und Federschiene 20 weitest gehend verhindert werden. Die Federschiene 20 kann beispielsweise aus einem Federstahl geeigneter Elastizität oder auch aus einem Kunststoff bestehen. Eine Federschiene 20 aus Kunststoff weist vorzugsweise eine geeignete Faserverstärkung auf. Hierdurch kann eine Federschiene 20 mit konstantem Querschnitt eine variable Krümmung und/oder eine variable Steifigkeit über ihre Länge erhalten.

Die Montage der Federschiene 20 im Hohlkanal 25 erfolgt gemäß der Erfindung durch eine Aufweitung des Hohlkanals auf einen Querschnitt, der ein Einschieben der Federschiene 20 erlaubt. Die Aufweitung kann insbesondere durch eine Beaufschlagung mit einem geeigneten Überdruck erfolgen, beispielsweise durch Einblasung von Pressluft. Die Aufweitung erfolgt vorzugsweise durch den dabei entstehenden Staudruck. Gemäß einer ersten Verfahrensvariante wird die Federschiene 20 in eine Seite des beidseitig offenen Hohlkanals 25 um wenige Millimeter eingeschoben und diese Seite anschließend verschlossen, bspw. durch eine Verspannung oder Verklemmung. Am anderen Ende des Hohlkanals 25 wird der Überdruck aufgebracht, wonach die Federschiene 20 weiter eingeschoben werden kann. Die Beaufschlagung mit Pressluft erfolgt bei dieser Verfahrensvariante von der gegenüber liegenden Seite der Einschubrichtung der Federschiene 20. Nach dem vollständigen Einschieben der Federschiene 20 kann die Pressluft abgeschaltet werden. Nach der Entspannung des Hohlprofils 24 sitzt die Federschiene 20 mit strammem Presssitz. Um zu vermeiden, dass das Wischgummiprofil zu weit aufgeblasen wird, kann eine Umkapselung vorgesehen sein, welche die maximale Aufdehnung des Hohlprofils 24 auf ein zulässiges und notwendiges Maß beschränkt.

Eine alternative Verfahrensvariante zum Einschieben der Federschiene 20 sieht vor, dass das Gummi des Hohlprofils 24 von einer Düse umschlossen und gehalten wird. Die Federschiene 20 wird um wenige Millimeter eingeschoben, wonach in die Düse Luft eingeblasen wird. Hierdurch weitet sich das elastische Hohlprofil 24. Um eine Längsverschiebung der Federschiene 20 zu ermöglichen, erfolgt die Abdichtung durch das Profil 24 selbst. Die in den Hohlkanal 25 eingeblasene Luft entweicht entlang der Federschiene 20.

Nachdem auf diese Weise das Wischblatt 12 fertig gestellt ist, kann das Kupplungsteil 14 durch Aufschieben montiert werden. Hierbei werden die Klammern 30 in die Führungsnuten 26 geschoben, bis die gewünschte Position erreicht ist. Diese befindet sich vorzugsweise mittig am Wischblatt 12. Um diese gewählte Position während des Betriebs sicherzustellen, kann das Kupplungsteil 14 mit einem oder mehreren Klemmstiften 32 versehen sein, welche die Wischleiste 16 von oben durchdringen und für eine sichere Klemmung sorgen. Ein solcher Klemmstift 32 kann bis zur Federschiene 20 eindringen, wie dies in der Schnittdarstellung der Figur 5 verdeutlicht ist.

Diese Klemmstifte 32 ermöglichen zudem einen etwas lockereren Sitz des Kupplungsteils 14, so dass zuverlässig jede Verformung der Wischleiste 16 durch die in die Führungsnuten 26 eingreifenden Klammern 30 verhindert wird. Eine solche Verformung könnte zu einer Verformung der Wischlippe 18 im Bereich der Befestigung des Kupplungsteils 14 und damit zu einer Beeinträchtigung der Wischleistung führen.

## Patentansprüche

1. Verfahren zur Herstellung einer Wischvorrichtung für Scheiben von Kraftfahrzeugen, die aus einem gelenklosen Wischblatt mit einer Wischleiste und einer Wischlippe besteht, bei dem eine Federschiene in einen Hohlkanal eines Hohlprofils der Wischleiste eingeschoben wird, **dadurch gekennzeichnet, dass** ein Hohlkanal (25) verwendet wird, der im entspannten Zustand einen Querschnitt aufweist, der geringfügig kleiner ist als ein Querschnitt der Federschiene (20), wobei der Hohlkanal (25) während des Einschiebens der Federschiene (20) mittels Überdruck durch Pressluft aufgeweitet wird.

2. Verfahren nach Anspruch 1, **dadurch gekennzeichnet, dass** der Hohlkanal (25) zumindest bis auf einen Querschnitt bzw. eine Breite und/oder Dicke aufgeweitet wird, der gleich dem Querschnitt bzw. der Breite und/oder Dicke der Federschiene (20) ist.

## Claims

1. Method for producing a wiper device for motor vehicle windows, the wiper device comprising a joint-free wiper blade with a wiper strip and a wiper lip, in which a spring rail is pushed into a hollow channel in a hollow profile of the wiper strip, **characterized in that** use is made of a hollow channel (25) which, when relaxed, has a cross section which is slightly smaller that a cross section of the spring rail (20), the hollow channel (25) being expanded by compressed air by means of positive pressure during the pushing-in of the spring rail (20).

2. Method according to Claim 1, **characterized in that** the hollow channel (25) is expanded at least to a cross section or a width and/or thickness which is equal to the cross section or the width and/or thickness of the spring rail (20).

## Revendications

1. Procédé de fabrication d'un dispositif d'essuie-glace pour vitres de véhicules automobiles, qui se compose d'un balai d'essuie-glace sans articulation avec une raclette d'essuie-glace et une lèvre d'essuie-glace, dans lequel un rail élastique est enfoncé dans un canal creux d'un profilé creux de la raclette d'essuie-glace, **caractérisé en ce que** l'on utilise un canal creux (25) qui, dans l'état détendu, présente une section transversale qui est légèrement plus petite qu'une section transversale du rail élastique (20), le canal creux (25) étant élargi pendant l'enfoncement du rail élastique (20) au moyen d'une surpression avec de l'air de pression.

2. Procédé selon la revendication 1, **caractérisé en ce que** le canal creux (25) est élargi jusqu'à au moins une section transversale ou une largeur et/ou une épaisseur qui est égale à la section transversale ou la largeur et/ou l'épaisseur du rail élastique (20).
